# EUROPÄISCHE PATENTANMELDUNG

(11) **EP 1 384 646 A1**
(43) Veröffentlichungstag der Anmeldung: **28.01.2004**
(21) Anmeldenummer: 03017864.4
(22) Anmeldetag: 01.04.1999
(51) Int. Cl.: B62D 1/19, B60R 21/20

(54) **Sicherheitslenksäule, Sicherheitssystem für ein Fahrzeug und Fahrzeug mit einem Sicherheitssystem sowie Sicherheitsverfahren**

(30) Priorität: 11.05.1998 DE 29808317 U; 09.01.1999 DE 29900289 U; 03.02.1999 DE 29901657 U
(62) Teilanmeldung aus: 99924750.5
(71) Anmelder: ThyssenKrupp Presta AG, 9492 Eschen (LI)
(72) Erfinder: Müller, Olaf, 65428 Rüsselsheim (DE)
(74) Vertreter: Lindner, Manfred Klaus, Dipl.-Phys.

(57) **Zusammenfassung**

Die Erfindung betrifft eine Sicherheitslenksäule, die in ihrer Axialrichtung verstellbar ist, wobei pyrotechnisch betriebene Lenksäulen-Rückzugseinrichtungen vorgesehen sind, mittels denen eine Verstellung der Sicherheitslenksäule in ihrer Axialrichtung bei einem Crash vom Insassen weg betreibbar ist und die zur Auslösung eine pyrotechnische Patrone enthalten, und wobei die Lenksäulen-Rückzugseinrichtungen in Abhängigkeit von Fahrerdaten steuerbar, insbesondere ein- und ausschaltbar sind, wobei eine Überwachungselektronik vorgesehen ist, die ausgelegt ist, zu erkennen, wenn eine kleine Person zu dicht vor dem Lenkrad sitzt, und in diesem Fall zu veranlassen, daß die pyrotechnische Patrone gezündet wird. Ferner betrifft die Erfindung ein Sicherheitssystem für ein Fahrzeug mit einer solchen Sicherheitslenksäule sowie ein Fahrzeug mit einem solchen Sicherheitssystem. Außerdem betrifft die Erfindung noch ein Sicherheitsverfahren zum Auslösen und Betätigen einer Sicherheitslenksäule und/oder eines Sicherheitssystems damit, wobei die Sicherheitslenksäule in ihrer Axialrichtung verstellbar ist durch pyrotechnisch betriebene Lenksäulen-Rückzugseinrichtungen, mittels denen eine Verstellung der Sicherheitslenksäule in ihrer Axialrichtung bei einem Crash vom Insassen weg betreibbar ist und die zur Auslösung eine pyrotechnische Patrone enthalten, und wobei die Lenksäulen-Rückzugseinrichtungen in Abhängigkeit von Fahrerdaten gesteuert, insbesondere ein- und ausgeschaltet, werden, wobei eine Überwachungselektronik erkennt, wenn eine kleine Person zu dicht vor dem Lenkrad sitzt, und in diesem Fall die pyrotechnische Patrone zündet.

## Beschreibung

Die Erfindung betrifft eine Sicherheitslenksäule nach dem Oberbegriff des Anspruchs 1. Weiterhin betrifft die Erfindung ein Sicherheitssystem für ein Fahrzeug mit einer solchen Sicherheitslenksäule sowie ein Fahrzeug mit einem solchen Sicherheitssystem. Ferner betrifft die Erfindung ein Sicherheitsverfahren.

Es sind aus der Praxis Sicherheitslenksäulen bekannt, die im Fall eines Frontaufpralls des damit ausgerüsteten Fahrzeuges eine Bewegung des Lenkrades vom Fahrer weg bereitstellen. Dabei handelt es sich um rein mechanische Systeme, die nur die Bewegungsenergie des Fahrzeuges zur Lenksäulenverstellung nutzen. In Abhängigkeit von der konkreten Unfallsituation ist dabei nicht zuverlässig eine gewünschte Funktion und ein Schutz des Fahrzeuführers gewährleistet.

Die Erfindung hat das Ziel einer weiteren Erhöhung der Sicherheit für Kraftfahrzeuginsassen.

Dieses Ziel wird mit einer Sicherheitslenksäule nach dem Anspruch 1, einer Sicherheitssystem nach dem Anspruch 6, einem Fahrzeug nach dem Anspruch 7 und einem Sicherheitsverfahren nach dem Anspruch 8 erreicht.

Erfindungsgemäß wird eine Sicherheitslenksäule geschaffen, die in ihrer Axialrichtung verstellbar ist, wobei pyrotechnisch betriebene Lenksäulen-Rückzugseinrichtungen vorgesehen sind, mittels denen eine Verstellung der Sicherheitslenksäule in ihrer Axialrichtung bei einem Crash vom Insassen weg betreibbar ist und die zur Auslösung eine pyrotechnische Patrone enthalten, und wobei die Lenksäulen-Rückzugseinrichtungen in Abhängigkeit von Fahrerdaten steuerbar, insbesondere ein- und ausschaltbar sind, und wobei ferner eine Überwachungselektronik vorgesehen ist, die ausgelegt ist, zu erkennen, wenn eine kleine Person zu dicht vor dem Lenkrad sitzt, und in diesem Fall zu veranlassen, daß die pyrotechnische Patrone gezündet wird.

Vorzugsweise kann dabei weiter vorgesehen sein, daß der Überwachungselektronik Ultraschall- oder Infrarotsensoren, Sitzbelegungserkennungsmatten und/oder eine Sitzlageund/oder Sitzpositionserkennung, insbesondere durch Sitzeinstellungs- oder Sitzmemoryelektronikabfragen oder einen Schalter in der Sitzschiene, der die Position abfragt und bei vorderen Fahrersitzstellungen richtigerweise kleine Personen diagnostiziert, zugeordnet sind/ist, um darüber festzustellen, wenn eine kleine Person zu dicht vor dem Lenkrad sitzt, und/oder daß der Überwachungselektronik eine Gurtanschnallerkennung, insbesondere mit einem Schalter in einem Gurtschloß, des Fahrers zugeordnet ist, um darüber festzustellen, wenn der Fahrer angeschnallt ist oder nicht und jedenfalls für eine kleine, nicht angeschnallte Person die Lenkradverstellung weg vom Kopf zu steuern.

Andere bevorzugte Weiterbildungen bestehen darin, daß durch die Verstellung der Sicherheitslenksäule in ihrer Axialrichtung bei einem Crash vom Insassen weg sich somit der Abstand von einem Airbag zum Kopf um ca. 70 mm vergrößerbar ist, und/oder daß mit einer einfachen Sitzlage- und/oder Anschnallerkennung bei jeder neuen Fahrt grundsätzlich vor einem Unfall entschieden wird, ob die Lenkung auf mehr Abstand gebracht wird oder nicht, und/oder ob eine Airbagvorrichtung erst diagnostizieren muß, ob eine zweite, mehr Sicherheit bietende, aber aggressivere Stufe zünden darf oder nicht.

Ferner kann die erfindungsgemäße Sicherheitslenksäule mit Vorzug dadurch fortgebildet sein, daß die pyrotechnische Patrone bei großen Personen nicht aktiviert wird, und/oder daß Lastabsorptionseinrichtungen vorgesehen sind, und daß die Überwachungselektronik ausgelegt ist, zu veranlassen, daß die Lastabsorptionseinrichtungen bei großen und/oder schweren Personen wirksam und vorzugsweise bei kleinen Personen unwirksam sind, und/oder daß ein Lenksäulenbefestigungsschlitten elektronisch gesteuert bei großen Personen mit einem Lastabsorbierungsblech Lastspitzen aufnimmt, und gleichzeitig verwendet wird, um pyrotechnisch insbesondere elektronisch gesteuert die Sicherheitslenksäule auf größere Distanz zu kleinen, nahe an einem Airbag sitzenden Personen zu bringen.

Noch weitere vorzugsweise Ausgestaltungen der Sicherheitslenksäule nach der Erfindung bestehen darin, daß mittels Sitzpositionserkennung und/oder Gurtanschnallerkennung bei der Lenkung durch die Überwachungselektronik entschieden wird, ob
ein Crashschlitten Energie aufnehmend oder als Bewegungsschlitten für mehr Abstand zwischen Kopf und Bag benutzt wird, oder
eine Komfortlängs- und/oder Höhenverstellung geöffnet wird oder nicht, insbesondere in Abhängigkeit vom Gewicht der Person oder ihrem Anschnallverhalten, oder
ein Airbagdruck eine Komfortverstellung der Lenkung öffnet und dann insbesondere über eine Druckwanne in jedem Fall eine Airbagabdeckung öffnet, damit der Bag weich austreten kann, und ggf. eine zweite Stufe der Airbagvorrichtung dann von einem Airbagsteuergerät oder alternativ vom gleichen Signal gezündet werden kann, wie eine erste Stufe, insbesondere bei großen, schweren Personen, die angeschnallt sind, oder bei kleinen oder/und nicht angeschnallten Personen der Bag der ersten Stufe weich austritt und mittels angenähter Fäden feststellt, ob sich der Bag überall voll ausdehnen kann, und erst dann, wenn niemand im Weg ist, die zweite Stufe gezündet wird.

Bei einem erfindungsgemäßen Sicherheitsverfahren zum Auslösen und Betätigen einer Sicherheitslenksäule und/oder eines Sicherheitssystems damit, wobei die Sicherheitslenksäule in ihrer Axialrichtung verstellbar ist durch pyrotechnisch betriebene Lenksäulen-Rückzugseinrichtungen, mittels denen eine Verstellung der Sicherheitslenksäule in ihrer Axialrichtung bei einem Crash vom Insassen weg betreibbar ist und die zur Auslösung eine pyrotechnische Patrone enthalten, und wobei die Lenksäulen-Rückzugseinrichtungen in Abhängigkeit von Fahrerdaten gesteuert, insbesondere ein- und ausgeschaltet, werden, ist ferner vorgesehen, daß eine Überwachungselektronik erkennt, wenn eine kleine Person zu dicht vor dem Lenkrad sitzt, und in diesem Fall die pyrotechnische Patrone zündet.

Vorteilhafte und bevorzugte Weiterbildungen davon bestehen darin, daß durch die Verstellung der Sicherheitslenksäule in ihrer Axialrichtung bei einem Crash vom Insassen weg sich somit der Abstand von einem Airbag zum Kopf um ca. 70 mm vergrößert wird, und/oder daß mit einer einfachen Sitzlage- und/oder Anschnallerkennung bei jeder neuen Fahrt grundsätzlich vor einem Unfall entschieden wird, ob die Lenkung auf mehr Abstand gebracht wird oder nicht, und/oder ob eine Airbagvorrichtung erst diagnostizieren muß, ob eine zweite, mehr Sicherheit bietende, aber aggressivere Stufe zünden darf oder nicht, und/oder daß die pyrotechnische Patrone bei großen Personen nicht aktiviert wird, und/oder daß Lastabsorptionseinrichtungen vorgesehen sind, und daß die Überwachungselektronik veranlaßt, daß die Lastabsorptionseinrichtungen bei großen und/oder schweren Personen wirksam und vorzugsweise bei kleinen Personen unwirksam sind, und/oder daß ein Lenksäulenbefestigungsschlitten elektronisch gesteuert bei großen Personen mit einem Lastabsorbierungsblech Lastspitzen aufnimmt, und gleichzeitig verwendet wird, um pyrotechnisch insbesondere elektronisch gesteuert die Sicherheitslenksäule auf größere Distanz zu kleinen, nahe an einem Airbag sitzenden Personen zu bringen.

Noch eine weitere Ausgestaltugnen, die mit Vorzug und Vorteil zum Einsatz kommen können sieht vor, daß mittels Sitzpositionserkennung und/oder Gurtanschnallerkennung bei der Lenkung durch die Überwachungselektronik entschieden wird, ob
ein Crashschlitten Energie aufnehmend oder als Bewegungsschlitten für mehr Abstand zwischen Kopf und Bag benutzt wird, oder
eine Komfortlängs- und/oder Höhenverstellung geöffnet wird oder nicht, insbesondere in Abhängigkeit vom Gewicht der Person oder ihrem Anschnallverhalten, oder
ein Airbagdruck eine Komfortverstellung der Lenkung öffnet und dann insbesondere über eine Druckwanne in jedem Fall eine Airbagabdeckung öffnet, damit der Bag weich austreten kann, und ggf. eine zweite Stufe der Airbagvorrichtung dann von einem Airbagsteuergerät oder alternativ vom gleichen Signal gezündet werden kann, wie eine erste Stufe, insbesondere bei großen, schweren Personen, die angeschnallt sind, oder bei kleinen oder/und nicht angeschnallten Personen der Bag der ersten Stufe weich austritt und mittels angenähter Fäden feststellt, ob sich der Bag überall voll ausdehnen kann, und erst dann, wenn niemand im Weg ist, die zweite Stufe gezündet wird.

Vorzugsweise sind die Lenksäulen-Rückzugseinrichtungen derart ausgelegt, daß sie bei ihrer Auslösung zunächst eine Lenksäulenaxialverstellung freigeben, was insbesondere durch pyrotechnische Betriebsmittel erfolgen kann, und dann das Rückziehen der Lenksäule längs deren Axialverstellweg bewirken.

Mit Vorzug sind die Lenksäulen-Rückzugseinrichtungen antriebsmäßig mit Betriebseinrichtungen für einen Airbag und insbesondere einem mehrstufig auslösbaren Airbag gekoppelt, so daß dieselben pyrotechnischen Betriebsmittel, die zum Aufblasen des Airbags vorhanden sind, zumindest auch teilweise zum Antrieb der Lenksäulen-Rückzugseinrichtungen und insbesondere zum Rückziehen der Lenksäule längs deren Axialverstellweg eingesetzt werden.

Ferner ist es bei der vorstehenden Weiterbildung der Erfindung bevorzugt, wenn das Aurblasen und Entfalten des Airbags, und insbesondere das mehrstufige Aufblasen und Entfalten des Airbags in Abhängigkeit vom Rückzugsweg und/oder der Rückzugsposition der Lenksäule abhängig steuerbar ist. Dies kann beispielsweise durch eine mechanische Steuerung erfolgen, die Folgeauslösungen der pyrotechnischen Betriebseinrichtungen für die Lenksäulen-Rückzugseinrichtungen und/oder den Airbag mechanisch in Abhängigkeit vom Rückzugsweg und/oder der Rückzugsposition der Lenksäule und/oder vom Aufblas-/Entfaltungszustand des Airbags bewirkt.

Durch eine derartige Sicherheitslenksäule wird die Sicherheit für einen Fahrer eines Fahrzeuges weiter optimiert.

Ein erfindungsgemäßes Sicherheitssystem sowie ein Fahrzeug gemäß der Erfindung zeichnen sich durch eine Sicherheitslenksäule mit pyrotechnisch betriebene Lenksäulen-Rückzugseinrichtungen aus, die in Abhängigkeit von einer Unfallbedingung auslösbar sind.

Vorzugsweise enthält ein solches Sicherheitssystem oder Fahrzeug Einrichtungen zur Erfassung der Sitzposition des Fahrers und Einrichtungen, die den Betrieb der Lenksäulen-Rückzugseinrichtungen in Abhängigkeit von der Sitzposition des Fahrers steuern. Aus oder statt der oder zusätzlich zur Sitzposition können auch Größe, Gewicht und/oder Konstitution des Fahrers zur Steuerung des Betriebs der Lenksäulen-Rückzugseinrichtungen erfaßt und berücksichtigt werden.

Nachfolgend sind weitere grundlegende Fortbilduzngsprinzipien der Erfindung sowie bevorzugte und vorteilhafte Ausgestaltungen davon in Listenform angegeben.
1. Sicherheitslenksäule, die in ihrer Axialrichtung verstellbar ist, dadurch gekennzeichnet, daß pyrotechnisch betriebene Lenksäulen-Rückzugseinrichtungen vorgesehen sind, mittels denen eine Verstellung der Sicherheitslenksäule in ihrer Axialrichtung bei einem Crash vom Insassen weg betreibbar ist.
2. Sicherheitslenksäule, dadurch weitergebildet, daß die pyrotechnisch betriebenen Lenksäulen-Rückzugseinrichtungen wenigstens einen pyrotechnisch angetriebenen Zylinder zum Verstellen der Sicherheitslenksäule in ihrer Axialrichtung enthalten.
3. Sicherheitslenksäule, dadurch weitergebildet, daß sie derart mit einem pyrotechnisch angetriebenem Zylinder versehen ist, daß dieser mittels über Nocken eingesteuerter Zahnstange angreifend an einem Zahnrad die Verklemmachse der Komfortverstellung verdrehen kann, um damit die Verstellrastung zu öffnen.
4. Sicherheitslenksäule, dadurch weitergebildet, daß sie derart mit einem pyrotechnisch angetriebenem Zylinder versehen ist, daß dieser mittels eines Schwenkhebels eine Verklemmachse der Komfortverstellung verdrehen kann, um damit die Verstellverrastung zu öffnen.
5. Sicherheitslenksäule, dadurch weitergebildet, daß die Lenksäulen-Rückzugseinrichtungen in Abhängigkeit von Fahrerdaten steuerbar, insbesondere ein- und ausschaltbar sind.
6. Sicherheitslenksäule, dadurch weitergebildet, daß ein pyrotechnischer Zylinder enthalten ist, der derart angebracht ist, daß er im unfallfreien Normalzustand bei Lenkungskomfortverstellung in einer Schlitzführung gleitet.
7. Sicherheitslenksäule, dadurch weitergebildet, daß eine Komfortverstellung mit einer Verstellmechanik vorgesehen ist, und daß eine als Zahnstange ausgeführte Kolbenstange der Verstellmechanik in jeder Komfortstellung nach zumindest etwa gleich kurzem Hub in ein Verstellzahnrad eingreift.
8. Sicherheitslenksäule, dadurch weitergebildet, daß ein pyrotechnischer Verstellzylinder enthalten ist, der an einer Führung derart beweglich gelagert ist, daß er in einer Ausgangsstellung mit der Komfortverstellung bewegt wird.
9. Sicherheitslenksäule, dadurch weitergebildet, daß ein pyrotechnischer Verstellzylinder enthalten ist, der in seiner Schlitzführung derart gelagert ist, daß bei Auslösung der Lenksäulen-Rückzugseinrichtungen eine Verkeilung von zwei durch Abscherstifte verbundene Keilen derart verklemmt, daß ein Keil durch Mitnahme des Zylinders gegen den anderen verkeilt wird und damit der Zylinder fixiert ist.
10. Sicherheitslenksäule, dadurch weitergebildet, daß ein pyrotechnischer Zylinder vorgesehen ist, der derart in einer Schlitzführung gelagert ist, daß sich zwei keilförmige Mitnehmer gegeneinander verkeilen, indem ein Keil durch den Zylinder in einer Richtung bewegt wird und der andere mittels abreißbarem Mitnehmer in der Gegenrichtung mit der Kolbenstange des Zylinders bewegt wird.
11. Sicherheitslenksäule, dadurch weitergebildet, daß ein pyrotechnischer Zylinder vorgesehen ist, der derart gestaltet ist, so daß damit außer der Öffnung einer Verstellmechanik der Sicherheitslenksäule danach ein Schlitten zur Befestigung der Sicherheitslenksäule vom Fahrer weg bewegbar ist.
12. Sicherheitslenksäule, dadurch weitergebildet, daß ein pyrotechnischer Zylinder vorgesehen ist, der derart geführt ist, daß er in einer Komfortverstellschlittenführung über den Komfortweg hinaus bewegt wird.
13. Sicherheitslenksäule, dadurch weitergebildet, daß ein pyrotechnischer Zylinder vorgesehen ist, der derart geführt ist, daß der Zylinder am Ende seines Hubes verrastet.
14. Sicherheitslenksäule, dadurch weitergebildet, daß ein pyrotechnischer Zylinder vorgesehen ist, der mit einem Klemmkolben versehen ist, so daß sich der Klemmkolben nur vorwärts beweglich ist und bei Last in Gegenrichtung klemmt.
15. Sicherheitslenksäule, dadurch weitergebildet, daß der pyrotechnische Zylinder einen Kolben enthält, der mittels klemmender Kugeln oder eines verklemmbar ist.
16. Sicherheitslenksäule, dadurch weitergebildet, daß ein pyrotechnischer Zylinder vorgesehen ist, wobei auf der der Kraftseite gegenüberliegender Seite des Zylinders eine Dämpfung, insbesondere eine Hydraulik- oder Luftdämpfung derart angebracht ist, daß mit der Abströmung der Medien eine Geschwindigkeitsregulierung bewirkbar ist.
17. Sicherheitslenksäule, dadurch weitergebildet, daß ein pyrotechnischer Zylinder vorgesehen ist, der derart zündbar ist, daß eine Abstimmung mit der Zündung eines Airbags erfolgt.
18. Sicherheitslenksäule, dadurch weitergebildet, daß ein Lenksäulenbefestigungsschlitten und eine solche Lastblechgestaltung vorgesehen sind, daß das Lastblech nach dessen Entriegelung vom Schlitten weggebogen wird und die Längsbewegung des Schlittens freigibt.
19. Sicherheitslenksäule, dadurch weitergebildet, daß der Lenksäulenbefestigungsschlitten elektronisch gesteuert bei großen Personen mit dem Lastabsorbierungsblech Lastspitzen aufnimmt, und gleichzeitig verwendet wird, um pyrotechnisch insbesondere elektronisch gesteuert die Sicherheitslenksäule auf größere Distanz zu kleinen, nahe am Bag sitzenden Personen zu bringen.
20. Sicherheitslenksäule, die in ihrer Axialrichtung verstellbar ist und Lenksäulen-Rückzugseinrichtungen enthält, dadurch weitergebildet, daß die Lenksäulen-Rückzugseinrichtungen derart ausgelegt sind, daß sie bei ihrer Auslösung zunächst eine Axialverstellung der Lenksäule freigeben und dann das Rückziehen der Lenksäule längs eines Axialverstellweges von einem Insassen weg bewirken.
21. Sicherheitslenksäule, dadurch weitergebildet, daß pyrotechnische Betriebsmittel zum Freigeben einer Axialverstellung und/oder zur Axialverstellung der Lenksäule längs eines Axialverstellweges von einem Insassen weg vorgesehen sind.
22. Sicherheitslenksäule nach Version 20 oder 21 in Verbindung mit einer der Versionen 1 bis 19.
23. Sicherheitssystem, gekennzeichnet durch eine Sicherheitslenksäule nach einem der vorhergehenden Versionen.
24. Sicherheitssystem, dadurch weitergebildet, daß die Sicherheitslenksäule über ein Lastabsorbierungsblech derart an einem Schlitten befestigt ist, daß die Befestigung des Lastabsorbierungsblechs bei einem Crash trennbar ist.
25. Sicherheitssystem, dadurch weitergebildet, daß pyrotechnische Betriebsmittel einer Airbagvorrichtung vorgesehen sind, die in den pyrotechnisch betriebenen Lenksäulen-Rückzugseinrichtungen enthalten oder damit gekoppelt sind.
26. Sicherheitssystem, dadurch weitergebildet, daß Betriebseinrichtungen für einen Airbag und insbesondere einem mehrstufig auslösbaren Airbag vorgesehen sind, mit denen die Lenksäulen-Rückzugseinrichtungen antriebsmäßig gekoppelt sind, so daß dieselben pyrotechnischen Betriebsmittel, die zum Aufblasen des Airbags vorhanden sind, zumindest auch teilweise zur Verstellfreigabe und/oder zum Verstellantrieb der Lenksäulen-Rückzugseinrichtungen einsetzbar sind.
27. Sicherheitssystem, dadurch weitergebildet, daß das Aufblasen und Entfalten des Airbags, und insbesondere ggf. das mehrstufige Aufblasen und Entfalten des Airbags in Abhängigkeit vom Rückzugsweg und/oder der Rückzugsposition der Lenksäule steuerbar ist oder umgekehrt.
28. Sicherheitssystem, dadurch weitergebildet, daß ein Aufblasen und Entfalten des Airbags, insbesondere ggf. das mehrstufige Aufblasen und Entfalten des Airbags, und/oder ein Zurückziehen der Lenksäule in Abhängigkeit von Insassendaten steuerbar ist.
29. Sicherheitssystem, dadurch weitergebildet, daß eine vorzugsweise mechanische Steuerung vorgesehen ist, die Folgeauslösungen der pyrotechnischen Betriebseinrichtungen für die Lenksäulen-Rückzugseinrichtungen und/oder den Airbag insbesondere mechanisch in Abhängigkeit vom Rückzugsweg und/oder der Rückzugsposition der Lenksäule und/oder vom Aufblas- /Entfaltungszustand des Airbags bewirkt.
30. Fahrzeug, gekennzeichnet durch eine Sicherheitslenksäule und/oder ein Sicherheitssystem nach einer der Versionen 1 bis 29.
31. Sicherheitsverfahren zum Auslösen und Betätigen einer Sicherheitslenksäule und/oder eines Sicherheitssystems nach einem der vorhergehenden Ansprüche, dadurch gekennzeichnet, daß zunächst über eine Zündung einer einzigen oder ersten Treibladung eine Arretierung oder Hemmung der Sicherheitslenksäule in deren Axialrichtung gelöst bzw. aufgehoben wird, und daß dann die Sicherheitslenksäule durch die Wirkung der Treibladung, der ersten Treibladung oder einer weiteren ggf. zweiten Treibladung in Richtung auf ihre maximal zurückgezogene Position vom Fahrer weg beaufschlagt wird.
32. Sicherheitsverfahren, dadurch weitergebildet, daß die weitere Treibladung eine zweite Treibladung ist, die durch die Wirkung der gezündeten ersten Treibladung gezündet wird.
33. Sicherheitsverfahren, dadurch weitergebildet, daß die weitere Treibladung eine zweite Treibladung ist, mittels der nach ihrer Zündung gleichzeitig mit oder zeitversetzt zu dem Lenksäulenrückzug ein Airbag aufgeblasen wird.
34. Sicherheitsverfahren in einem Kraftfahrzeug, wobei eine Lenksäule bei einem Unfall, insbesondere bei Auslösung eines Lenkrad-Airbags, vom Fahrer wegbewegt wird, dadurch gekennzeichnet, daß vor einer unfallbedingten Lenksäulenbewegung vom Fahrer weg die Sitzposition des Fahrers erfaßt wird, und dann in Abhängigkeit von der Sitzposition, wenn letztere einen vorgegebenen oder vorgebbaren Abstand vom Lenkrad unterschreitet, und oder anderer Insassendaten vor oder während einer Airbagauslösung durch gesonderte Betätigungseinrichtungen, wie z.B. pyrotechnische Kraftspeicher, die Lenksäule vom Fahrer weg bewegt wird.

Weitere vorteilhafte und bevorzugte Ausgestaltungen der Erfindung sind in den abhängigen Ansprüchen angegeben und aus der übrigen Beschreibung sowie der Zeichnung zu entnehmen.

Ausführungsbeispiele zur näheren Erläuterung der Erfindung sind in der zugehörigen Zeichnung gezeigt und behandelt, in der
Fig. 1A und 1B ein erstes Ausführungsbeispiel einer Sicherheitslenksäule mit Lenksäulen-Rückzugseinrichtungen und einem Fahrerairbag in einer Längs- bzw. einer Querschnittsdarstellung zeigt,
Fig. 2 ein zweites Ausführungsbeispiel einer Sicherheitslenksäule mit Lenksäulen-Rückzugseinrichtungen und einem Fahrerairbag in einer Querschnittsdarstellung in zwei Alternativen zeigt,
Fig. 3 ein drittes Ausführungsbeispiel einer Sicherheitslenksäule mit Lenksäulen-Rückzugseinrichtungen in einer Querschnittsdarstellung zeigt,
Fig. 4 ein viertes Ausführungsbeispiel einer Sicherheitslenksäule mit Lenksäulen-Rückzugseinrichtungen in einer Querschnittsdarstellung zeigt,
Fig. 5A, 5B und 5C Teile eines fünften Ausführungsbeispiels einer Sicherheitslenksäule mit Lenksäulen-Rückzugseinrichtungen in Schnittdarstellungen zeigt, und
Fig. 6 ein sechstes Ausführungsbeispiel einer Sicherheitslenksäule mit Lenksäulen-Rückzugseinrichtungen und einem Fahrerairbag in einer Querschnittsdarstellung zeigt.

In den einzelnen Figuren der Zeichnung sind gleiche oder ähnliche oder gleich oder ähnlich wirkende Teile mit denselben Bezugszeichen versehen oder vergleichbar dargestellt, so daß sich Teile sowie deren Kombinationen, Funktionen und Wirkungsweisen für einen Fachmann auch aus der Betrachtung der Figuren der Zeichnung alleine, deren Vergleich und/oder den nachfolgend beschriebenen Angaben ggf. alleine ohne weiteres erschließen, auch wenn keine Bezugnahmen zwischen einzelnen Figuren und/oder zwischen Figuren und Text explizit angegeben oder dargestellt sind.

Anhand der Figuren wird nachfolgend die Erfindung detailliert erläutert, wobei noch auf einige besonders vorteilhafte Gestaltungen und Effekte der entsprechenden Ausführungen eingegangen wird.

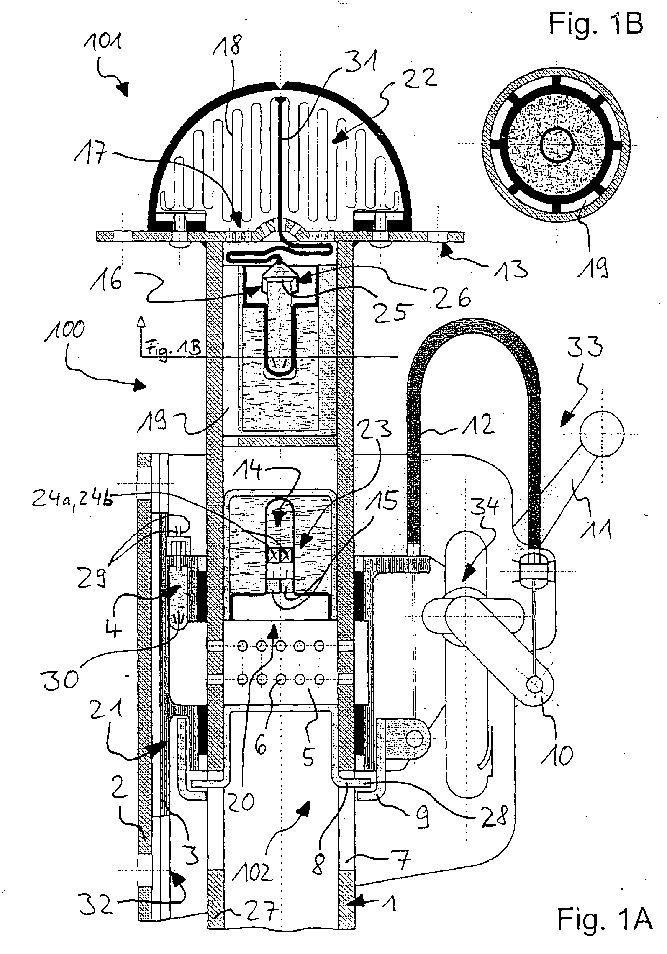

Ein erstes Ausführungsbeispiel einer Sicherheitslenksäule oder allgemein Sicherheitslenkung 100 mit Sicherheitseinrichtungen oder einem Sicherheitssystem 101 in Form von Lenksäulen-Rückzugseinrichtungen 102 und einem Fahrerairbag 22, der zweistufig ist, ist in den Fig. 1A und 1B gezeigt. Die Lenksäulen-Rückzugseinrichtungen 102 der Sicherheitseinrichtungen 101 enthalten eine Sekundärdruckzündung 20 und eine Rückfahrmechanik 21 der in der Fig. 1 teilweise dargestellten Lenksäule 1.

Die Lenksäule 1 ist bei dem Ausführungsbeispiel gemäß den Fig. 1A und 1B über einen Verstellschlitten 3 an einer Montageplatte 2 axial verstellbar angeordnet. Der Verstellschlitten 3 enthält eine Primärzündung 4, die in Kommunikation mit einer Druckkammer 5 mit Druckdurchgangslöchern 6 ist. Eine Begrenzung der Druckkammer 5 weist eine Schaltmuffe 8 auf und ist axial verschiebbar, wobei die Schaltmuffe 8 durch Schlitze 7 (nur ein Schlitz 7 ist gekennzeichnet) in einem Rohr 27 der Lenksäule 1 nach außerhalb des Rohrs 27 ragt. Das freie Ende 28 der Schaltmuffe 8 liegt zur Mitnahme bei Bewegung längs des Schlitzes 7 an einer Stellmuffe 9 an, an der ein Ende eines Bowdenzuges 12 befestigt ist. Das andere Ende des Bowdenzuges 12 ist an einem Lösehebel 10 befestigt, der mit einem Stellhebel 11 zusammenwirkt.

Weiterhin enthalten die Lenksäulen-Rückzugseinrichtungen 102 des ersten Ausführungsbeispiels der Fig. 1A und 1B eine Zündung 14 einer ersten Stufe des Fahrerairbags 22 in Form einer Sekundärdruckzündung 20. Die Zündung 14 der ersten Stufe des Fahrerairbags 22 verfügt über zwei Zündkolben 15, die von der Druckkammer 5 aus erreichbar sind, wofür die Erklärung weiter unten angegeben wird. Der Fahrerairbag 22 dieses Ausführungsbeispiels enthält weiterhin eine zweite Stufe mit einer Schnurzündung 16. Dem eigentlichen Bag 18 des Fahrerairbags 22 ist ein Partikelfilter 17 vorgeschaltet. Von der ersten Stufe führt ein Gasdurchtritt 19 (siehe auch Fig. 1B) an der zweiten Stufe vorbei in den Bag 18. Der Vollständigkeit halber ist noch eine Anschraubung 13 der Lenkung gezeigt.

In der Fig. 1 is eine Primärzündung angegeben, die, wie die gezeigten Anschlußleitungen 29 verdeutlichen elektrisch ausgelöst wird. Der durch die entsprechende Patrone oder Kartusche 30 erzeugte Druckstoß erfüllt insbesondere zwei Funktionen.

Einerseits wird durch diesen Druckstoß über die zwei Zündkolben 15 die Zündung der ersten Stufe (siehe Fig. 1A) mechanisch ausgelöst, die durch den Gasdurchtritt 19 (siehe auch Fig. 1B) außerhalb der mit der Schnurzündung 16 eingezeichneten zweiten Stufe den Airbag 18 teilweise aufblasen kann. Dadurch, daß die elektrisch auslösbare oder zündbare Patrone 30 ortsfest im Fahrzeug außerhalb der drehbaren Lenksäule 1 und des drehbaren Lenkrades (nicht gezeigt) angeordnet ist, wird in vorteilhafter Weise eine elektrische Verbindung zwischen dem drehbaren Lenkrad (nicht gezeigt) und einer fest im Fahrzeug (nicht gezeigt) installierten Airbag-Auslösesteuerung (nicht gezeigt) eingespart.

Eine Realisierungsmöglichkeit einer solchen früher erforderlichen elektrischen Verbindung ist eine sogenannte Wickelfeder z.B. aus Kunststoff, durch die die Anschlußleitungen zu einer elektrisch auslösbaren Patrone im drehbaren Lenkrad geführt sind und die sicherstellt, daß diese elektrische Patrone bei jeder Drehstellung des Lenkrades ausgelöst werden kann. Eine solche Wickelfeder hat aber einen relativ hohe Preis. Statt einer solchen teueren Wickelfeder kann nun einfach die vergleichsweise billige Kombination aus einer elektrischen im Fahrzeug ortsfesten Primärzündung und einer mit der Lenksäule und dem Lenkrad mitdrehbaren mechanisch ausgelösten ersten Zündstufe eingesetzt werden.

Der Vollständigkeit halber wird noch darauf hingewiesen, daß die Schnurzündung 16 nur dann ausgelöst wird, wenn sich der Airbag 18 ungehindert über einen vorgegebenen Punkt ausdehnen kann und dadurch so weit an der Schnur 31 zieht, daß dadurch ein Reißzünder oder eine zur Erhöhung der Auslösesicherheit bei dem hier behandelten ersten Ausführungsbeispiel vorgesehene Doppelreißzündung 26 betätigt wird, wobei auch andere Zündarten, wie z.B. Aufschlagzünder verwendet und mittels geeigneter Einrichtungen ausgelöst werden können.

Andererseits bewirkt die Primärzündung 4, daß die sich mit der Lenksäule bei Lenkbewegungen mitdrehende Schaltmuffe 8 im gezeigten Beispiel vom Lenkrad (nicht gezeigt) weg verstellt wird. Wenn die Primärzündung 4 für eine solche Betätigung zu klein ausgelegt ist, etwa aus Kostengründen, kann auch der Druck der ersten Zündstufe der Airbagvorrichtung 22 zum entsprechenden Verstellen der Schaltmuffe 8 verwendet werden, was besonders bevorzugt ist. Auch eine Kombination beider Drücke kann als weitere Alternative genutzt werden.

Die Schaltmuffe 8 ist an die bezüglich der Drehung der Lenksäule 1 stehende Stellmuffe 9 im Lenksäulenbock 32 gekoppelt. Dadurch wird auf einfache und geschickte Weise der Druckstoß der Primärzündung 4 innerhalb der drehbaren Lenksäule 1 zum Druckauslösen der Zündung 14 der ersten Stufe zum Füllen des Airbags 18 gleichzeitig für eine nach außerhalb der drehbaren Lenksäule 1 auf ein gegenüber Drehbewegungen der letzteren ruhendes System übertragen.

An die Stellmuffe 9 im Lenksäulenbock 32 ist der Bowdenzug 12 angeschlossen, durch den die Verstellbewegung dieser Stellmuffe 9 auf die Lenksäulenarretierung oder Lenksäulenkomfortfeststellung 33 übertragen wird, die dazu dient, die Lenksäule 1 in Längsrichtung axial und in Höhenrichtung in individuellen Einstellpositionen festzustellen. Die Verstellbewegung der Stellmuffe 9 im Lenksäulenbock 32 führt mittels des Bowdenzuges 12 somit zum Lösen der Lenksäulenarretierung 33, die beispielsweise durch eine mittels des Stellhebels 11 betätigbare Verschraubung 34 gelöst ist. Dazu greift der Bowdenzug 12 über den Lösehebel 10 an der Arretierverschraubung 34 an.

Somit wird mittels der Primärzündung 4 durch die mit der Lenksäule 1 zusammen drehbare Schaltmuffe 8 die Stellmuffe 9 verschoben, die an dem Bowdenzug 12 zieht, der wiederum den Lösehebel 10 verdreht, was zum Freigeben der Arretierung 34 der in Längs- und Höhenrichtung einstellbaren Lenksäule 1 führt, so daß letztere zurückgezogen werden kann.

In besonders vorteilhafter Weise wird zum Zurückschieben der Lenksäule 1 und damit des Lenkrades (nicht gezeigt) vom Fahrer weg der stoßartige Druck beim Aufblasen des Airbags 18 verwendet. Durch das Zünden der ersten Stufe und jeder weiteren Stufe (lediglich beispielhaft ist in den Fig. 1A, 2 und 6 nur eine zweite Stufe gezeigt, worauf die Erfindung jedoch nicht beschränkt ist) wird der Airbag 18 schlagartig aufgeblasen und zum Fahrer hin entfaltet. Als Reaktion dieses als Aktion anzusehenden Aufblasens des Airbags 18 ergibt sich auch ein Druckstoß vom Fahrer weg, der auf die durch die wie vorstehend beschrieben infolge der Primärzündung 4 freigegebene Lenksäule 1 in der Weise wirkt, daß diese vom Fahrer weg geschoben wird. Damit wird die zum Aufblasen des Airbags 18 verwendete Energie in besonders geschickter Weise gleichzeitig dazu genutzt, das Lenkrad (nicht gezeigt) vom Fahrer weg zu bewegen. Insbesondere durch diese Kombination von mehreren Sicherheitsfunktionen (die Lenkung wird durch den Druck des Airbags verschoben) werden Bauraum, Gewicht und Kosten gespart.

Ein Dämpfungselement (nicht gezeigt) in der Lenksäule 1 kann verwendet werden, um beim Zurückschieben der Lenksäule 1 einen größeren Airbag 18 zu vermeiden. Das Element (nicht gezeigt) ist derart abgestimmt, daß eine stirnwandseitige Verkürzung der Lenksäule 1 durch Ineinanderschieben einer Lenksäulennabe (nicht gezeigt) erreicht wird. Der Airbag 18 schiebt gleichzeitig von der anderen Seite.

Zur Erläuterung der Ausgestaltung der Airbagvorrichtung 22 wird noch darauf hingewiesen, daß bei diesem ersten Ausführungsbeispiel von Sicherheitseinrichtungen 101 gemäß der Fig. 1A die Zündung 14 der ersten Stufe des Fahrerairbags 22 mittels der zwei bereits weiter oben beschriebenen Zündkolben 15 als Doppelkolbenzündung 23 ausgebildet ist, die durch einen Druckstoß der Primärzündung 4 auslösbar ist. Dazu enthält die Doppelkolbenzündung 23 zwei Zünder 24a, 24b. Die Schnurzündung 16 der zweiten Stufe dieses Fahrerairbags 22 weißt einen Ringzünder 25 auf, an dem eine Doppelreißzündung 26 an zwei Seiten angreift.

Nachfolgend werden noch spezielle Ausgestaltungsmöglichkeiten der Erfindung beispielsweise im Rahmen des ersten Ausführungsbeispiels angegeben.

Allgemein schafft die Erfindung eine Sicherheitseinrichtung für ein Fahrzeug mit einem Lenkrad an einer Lenksäule, wobei die Sicherheitseinrichtung pyrotechnisch betriebene Lenksäulen-Rückzugseinrichtungen enthält.

Gemäß einer Weiterbildung kann vorgesehen sein, daß bei einer solchen Sicherheitseinrichtung die Lenksäulen-Rückzugseinrichtungen derart ausgelegt sind, daß sie bei ihrer Auslösung zunächst eine Lenksäulenaxialverstellung freigeben, was insbesondere durch pyrotechnische Betriebsmittel erfolgen kann, und dann das Rückziehen der Lenksäule längs deren Axialverstellweg bewirken.

Alternativ oder zusätzlich kann die Lenksäulen-Rückzugseinrichtungen antriebsmäßig mit Betriebseinrichtungen für einen Airbag und insbesondere einem mehrstufig auslösbaren Airbag gekoppelt sein, so daß dieselben pyrotechnischen Betriebsmittel, die zum Aufblasen des Airbags vorhanden sind, zumindest auch teilweise zum Freigeben und/oder Antrieb der Lenksäulen-Rückzugseinrichtungen einsetzbar sind.

Dabei kann vorrichtungs- oder verfahrensmäßig insbesondere vorgesehen sein, daß das Aufblasen und Entfalten des Airbags, und insbesondere ggf. das mehrstufige Aufblasen und Entfalten des Airbags in Abhängigkeit vom Rückzugsweg und/oder der Rückzugsposition der Lenksäule abhängig steuerbar ist. Oder aber die Vorrichtung oder das entsprechende Verfahren kann dergestalt sein, daß eine mechanische Steuerung vorgesehen ist, die Folgeauslösungen der pyrotechnischen Betriebseinrichtungen für die Lenksäulen-Rückzugseinrichtungen und/oder den Airbag mechanisch in Abhängigkeit vom Rückzugsweg und/oder der Rückzugsposition der Lenksäule und/oder vom Aufblas-/Entfaltungszustand des Airbags bewirkt.

Ein Verfahren zum Auslösen und Betätigen von Sicherheitseinrichtungen im Rahmen der Erfindung kann dadurch gekennzeichnet sein, daß zunächst über eine Zündung einer ersten Treibladung und/oder einer ersten Stufe von Airbagvorrichtungen oder einer einstufigen Airbagvorrichtung wenigstens eine Arretierung der Lenksäule in deren Axialrichtung gelöst wird, und daß dann die Lenksäule ggf. zur Zündung wenigstens einer zweiten Treibladung in Richtung auf ihre maximal zurückgezogene Position vom Fahrer weg beaufschlagt wird.

Bevorzugt wird bei diesem Verfahren ggf. die zweite Treibladung durch die Wirkung der gezündeten ersten Treibladung gezündet.

Alternativ oder zusätzlich kann bei dem erfindungsgemäßen Verfahren ferner vorgesehen sein, daß durch die gezündete zweite Treibladung gleichzeitig mit oder zeitversetzt zu dem Lenksäulenrückzug ein Airbag aufgeblasen wird.

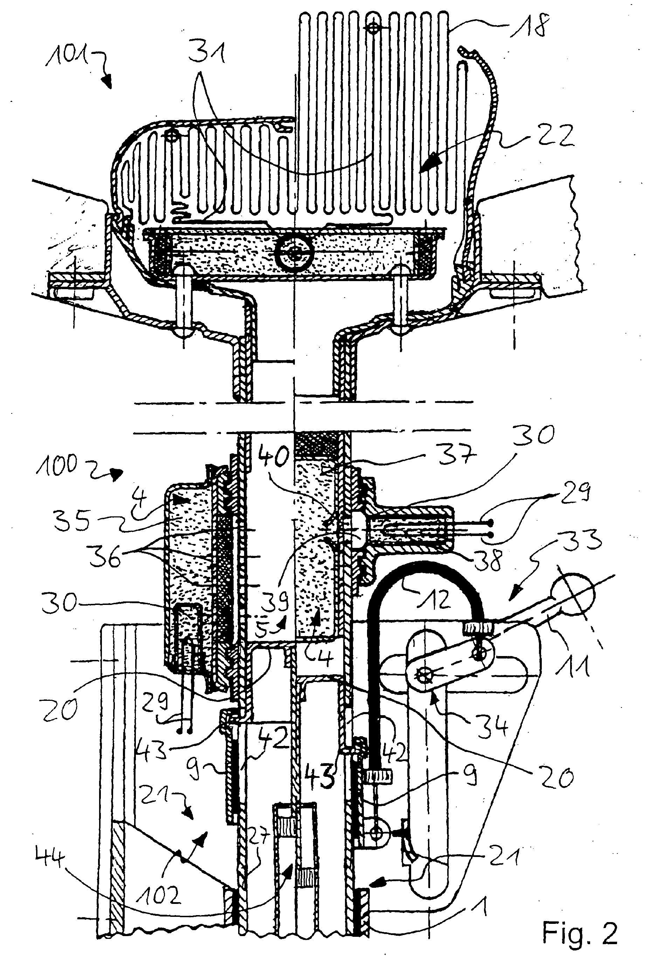

In der Fig. 2 ist ein zweites Ausführungsbeispiel einer Sicherheitslenksäule 100 gezeigt.

In der Abbildung der Fig. 2 sind die Sicherheitseinrichtungen 101 dieser Ausführung in der linken Hälfte vor einer Auslösung und in der rechten Hälfte nach einer Auslösung gezeigt.

Auch bei diesem Ausführungsbeispiel enthalten die Sicherheitseinrichtungen 101 eine zweistufige Airbagvorrichtung 22, deren zweite Stufe erst gezündet wird, wenn sich der Airbag 18 mittels der ersten Stufe so weit ausdehnen konnte, daß sichergestellt ist, daß sich nichts im Ausbreitungsbereich des Gassackes 18 befindet. Dies kann rein mechanisch über Kordeln oder Schnüre 31, die direkt an einem Zündmechanismus (nicht bezeichnet) ziehen oder durch Zug einen gespannten Zündmechanismus (nicht bezeichnet) freigeben können. Die Kordel(n) kann/können natürlich auch elektrische Schalter oder Hallsensoren o.ä. bedienen, wenn eine elektrische zweite Zündung benutzt wird. Die Zündung des zweiten Generators gibt damit vollen Druck nur dann auf den Gassack 18, wenn niemand zu dicht vor dem Airbag sitzt, bzw. erst, wenn die erste Stufe den Gassack 18 "in position" gesetzt hat.

Die Fig. 2 zeigt in der unteren Hälfte der Abbildung für die erste Stufe einen ringförmig die Lenksäule 1 umschließenden Generator 35. Die Lenksäule 1 kann sich drehen und der Generator 35 bleibt stehen. Dies hat den Vorteil, daß die elektrische Zündung statisch fest steht und damit keine kostspielige Wickelfeder zur Stromzuführung benötigt wird, wie bereits weiter oben erläutert wurde. Der Druckübergang geschieht durch Löcher 36 und wird z.B. mit Labyrinthdichtungen (nicht bezeichnet) abgedichtet.

Die Fig. 2 zeigt im rechten Teil der unteren Hälfte der Abbildung eine Alternative der Ausführung des ersten Generators 35, wie er vorstehend beschrieben und im linken Teil der unteren Hälfte der Abbildung der Fig. 2 gezeigt ist. Bei der Ausführung gemäß dem rechten Teil der Abbildung der Fig. 2 ist der Generator 37 in der Lenksäule 1 plaziert. Lediglich die elektrische Patrone 30 mit einem Booster 38 ist wegen der festen Zuleitung statisch angebracht und bringt ihre Zündenergie mittels eines Ringkanals 39 über Löcher 40 in den dünnwandigen Generator 37.

Vor- und unterhalb des Generators 35 oder 37 ist ein Kolben 41 in der Lenksäule 1 angebracht, dessen in Schlitzen 42 geführte Nasen 43 eine Muffe 9 bei Druckbeaufschlagung bezüglich dem tatsächlichen Einbau in einem Fahrzeug (nicht gezeigt) nach vom/unten bewegen. Diese Muffe 9 gibt ihre Bewegung weiter über einen Bowdenzug 12 an eine Links/Rechts-Gewindespindel oder allgemein Verschraubung 34 zur Öffnung der Längs- und Höhenverstellung der Lenksäule 1. Der Rückstoß des Airbags 18 schiebt die Lenkung 1 bezüglich dem tatsächlichen Einbau in einem Fahrzeug (nicht gezeigt) nach vorn und unten. Um zu verhindern, daß dann ein größerer Gassack 18 benötigt wird, kann die Verstellgeschwindigkeit mit einem Dämpfer 44 abgebremst werden.

Aus der Darstellung der vorstehend beschriebenen Ausführungsbeispiele ergeben sich u.a. folgende Vorteile:

Bevor die zweite Stufe den Gassack auf den Enddruck aufbläst, wird simultan manuell und einfach mit der Länge von Kordeln überprüft, ob niemand zu dicht am Airbag sitzt.

Die Ausführung der Generatoren in zwei Alternativen als "stehend", d.h. nicht rotierend, spart eine kostenintensive Wickelfeder zum Ausgleich der Drehbewegung des Lenkrades.

Die pyrotechnische Verstellung der Lenksäule gibt mehr Raum zwischen Person und Lenkung.

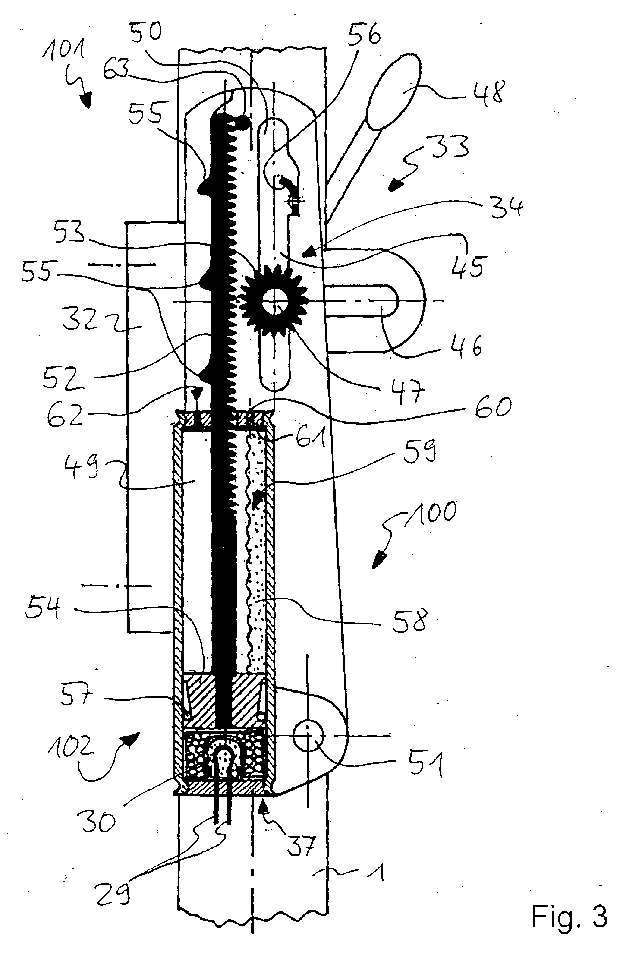

Unter Bezugnahme auf die Fig. 3 wird ein viertes Ausführungsbeispiel der Erfindung erläutert.

Wie bei den ersten und zweiten Ausführungsbeispielen liegt auch bei dem dritten Ausführungsbeispiel die Idee zugrunde, mehr Abstand zwischen Fahrer und Lenkrad während des Crashs zu schaffen, und zwar durch die nachfolgend zuerst allgemein angegebenen Ausführungen.

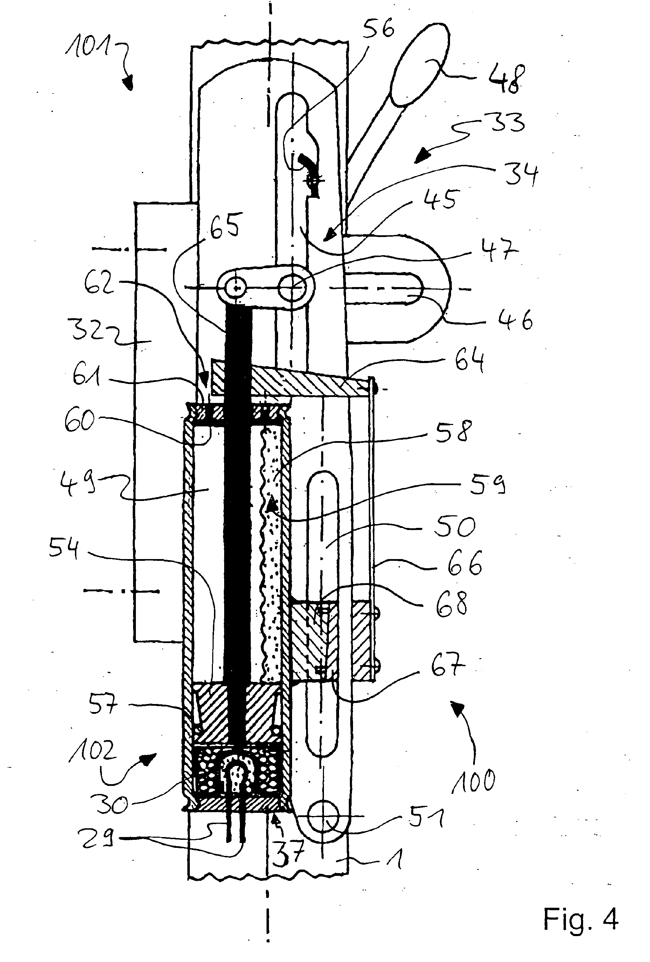

Einer serienmäßig aus Komfortgründen verstellbaren Lenkung wird gemäß dem dritten und auch vierten, später unter Bezugnahme auf die Fig. 4 erläuterten Ausführungsbeispiel allgemein ein pyrotechnisch angetriebener Zylinder parallelgeschaltet. Vor oder während der Auslösung des Airbags öffnet der Zylinder die Verriegelung der verstellbaren Lenkung und zieht dann die Lenksäule in Fahrzeugausrichtung nach vorn, d.h. vom Fahrer weg.

Die erfindungsgemäße Ausgestaltung sieht also eine verstellbare Lenksäule vor, die mittels pyrotechnisch angetriebenem Zylinder beim Crash vom Insassen weggezogen wird.

Gemäß einer bevorzugten Weiterbildung kann eine solche Lenksäule derart mit einem pyrotechnisch angetriebenem Zylinder versehen sein, daß dieser mittels über Nocken eingesteuerter Zahnstange angreifend an einem Zahnrad eine Verklemmachse der Komfortverstellung verdreht und damit die Verstellrastung öffnet.

Alternativ oder zusätzlich kann eine solche Lenksäule derart mit einem pyrotechnisch angetriebenem Zylinder versehen sein, daß dieser mittels Schwenkhebel die Verklemmachse der Komfortverstellung verdreht und damit die Verstellverrastung öffnet.

Um die Lenkungskomfortverstellung durch den erfindungsgemäß vorgesehenen pyrotechnischen Zylinder nicht zu beeinträchtigen, ist es ferner bevorzugt, die Anbindung des pyrotechnischem Zylinders derart zu gestalten, daß er im Normalzustand (d.h., außer bei einem Crash) in einer Schlitzführung bei Lenkungskomfortverstellung gleitet.

Ferner kann vorzugsweise vorgesehen sein, daß der pyrotechnische Verstellzylinder derart in die Verstellmechanik der Komfortverstellung eingreift, daß die als Zahnstange ausgeführte Kolbenstange in jeder Komfortstellung nach gleich kurzem Hub in ein Verstellzahnrad eingreift (siehe z.B. Fig. 3).

Weiterhin ist es bevorzugt, wenn der pyrotechnische Verstellzylinder derart in einer Führung beweglich gelagert ist, daß dieser in Ausgangsstellung mit der Komfortverstellung bewegt wird.

Der pyrotechnische Zylinder kann auch derart in seiner Schlitzführung gelagert sein, daß bei einer Zündung eine Verkeilung von zwei durch Abscherstifte verbundenen Keile verklemmt, derart, daß ein Keil durch Mitnahme des Zylinders gegen den anderen verkeilt wird und damit der Zylinder fixiert ist. Alternativ kann vorgesehen sein, daß der pyrotechnische Zylinder derart in seiner Schlitzführung gelagert ist, daß zwei keilförmige Mitnehmer sich gegeneinander verkeilen können. Ein Keil wird durch den Zylinder in einer Richtung bewegt, der andere mittels abreißbarem Mitnehmer in der Gegenrichtung mit der Kolbenstange des pyrotechnischen Zylinders bewegt.

Eine weitere bevorzugte Ausgestaltung der hier behandelten Ausführungsbeispiele besteht darin, daß der pyrotechnische Zylinder derart gestaltet ist, daß er außer der Öffnung der Verstellmechanik danach den Schlitten mit der Lenksäule vom Fahrer weg bewegt. Dies kann dadurch weitergebildet sein, daß der pyrotechnische Zylinder derart geführt ist, daß er in der Komfortschlittenführung über den Komfortweg hinaus bewegt wird. Zusätzlich kann der pyrotechnische Zylinder derart geführt sein, daß am Ende des Hubes das System verrastet. Es ist auch möglich, daß der pyrotechnische Zylinder derart mit einem in Gurtstraffern üblichen Klemmkolben versehen ist, daß der Kolben sich nur vorwärts bewegen kann und bei auftreten einer Last in Gegenrichtung klemmt. Letzteres kann dadurch fortgebildet werden, daß der Kolben derart gestaltet ist, daß statt klemmender Kugeln Lastaufnehmer (nicht gezeigt) eingesetzt werden.

Eine andere Ausgestaltung der hier behandelten Ausführungsbeispiele besteht darin, bei dem pyrotechnischen derart auf der der Kraftseite gegenüberliegender Seite eine Dämpfung (hydraulisch oder mit Luft) anzubringen, daß mit der Abströmung der Medien eine Geschwindigkeitsregulierung bewirkt wird.

Weiterhin kann der pyrotechnische Zylinder derart gezündet werden, daß eine Abstimmung mit der Zündung des Airbags erfolgt.

Weitere Ausgestaltungsmöglichkeiten und Vorteile ergeben sich aus den Kombinationen der vorstehend und nachfolgend angegebenen Merkmale und Merkmalskombinationen.

Die Fig. 3 zeigt eine Lenksäule 1 mit Komfortverstellung. Dargestellt sind eine waagrechte und eine senkrechte Kulissenführung 45 und 46, eine Klemmachse 47 und ein Verstellhebel 48. Die Verstellmechanik ist an einer Anschraubplatte (nicht bezeichnet) der Lenkung 100 befestigt.

Die Besonderheit ist ein der Verstellmechanik parallel geschalteter Zylinder 49. Der Zylinder 49 ist an einer Verstellkulisse 50 in einem schwenkbaren Lager 51 derart befestigt, daß seine Zahnstange 52 eine gleich nahe Lageposition zu einem Zahnrad 53 einnimmt, unerheblich davon, in welcher Position sich die Komfortverstellung befindet. Eine pyrotechnische Kartusche 30 wird von einem Computer (nicht gezeigt) zeitlich vor oder gleichzeitig zum Airbag (nicht gezeigt) gezündet. Der optimale Zündzeitpunkt kann durch Versuche ermittelt werden.

Eine Alternative stellt die Zündung in dem Fall dar, in dem eine Überwachungselektronik erkennt, daß z.B. eine kleine Person zu dicht vor dem Lenkrad sitzt.

Die pyrotechnische Energie treibt über den Kolben 54 die Zahnstange 52 an. Die Zahnstange 52 wird durch Nocken 55 zwangsgeführt mit dem Zahnrad 53 verrastet, das über die Klemmachse 56 die Lenksäulenverstellung entriegelt. Nachdem die Lenksäule 1 entriegelt ist (etwa nach einer viertel Umdrehung der Schwenkachse 14), schiebt der Zylinder 49 die Verstellung der Lenkung 100 nach vorn.

Im Normalfall wird die Lenkung 100 weiter nach vorne geschoben, als es die Komfortverstellung zuläßt. Hierbei verrastet die Verstellachse 47 hinter einer Komfortwegbegrenzung 56.

Wenn aus crashrelevanten Gründen die Lenkung 100 nicht den ganzen Weg nach vorn zurücklegen kann, ist eine Zwischenverrastung des Kolbens 54 mit Verrastkugeln 57 gegeben.

Wenn Versuche zeigen, daß die Verstellgeschwindigkeit der Lenkung 100 in konkreten Einsatzumgebungen und/oder -fällen ab einer bestimmten Wegstrecke gebremst werden muß (z.B. um das Zusammenspiel von Airbagentfaltung und des Abtauchens der Lenksäule zu optimieren), kann dies über eine Luft- oder Hydraulikbremse 58 durchgeführt werden. Auf der der pyrotechnischen Seite entgegengesetzten Seite wird das Medium 59 untergebracht und gezielt gebremst durch Düsenbohrungen 60 des Zylinderdeckels 61 gedrückt. Im Normalzustand sind diese Bohrungen 60 abgedichtet, wie bei 62 gezeigt ist.

Ebenso wird im Normalzustand die Zahnstange 52 mittels einer Lagesicherung 63 in Position gehalten. Die Bewegungsführung der Zahnstange 52 mittels der Nocken 55 zerbricht die Lagesicherung 63 bei einem Crash.

Nach dem Crash kann die Lenksäule 100 z.B. nach Austausch des Zylinders 49 und der Lagesicherung 63 wieder funktionstüchtig gemacht werden, wenn dies die übrige Lenkung 100 zuläßt.

Selbstverständlich können das Zahnrad 53 und die Zahnstange 52 auch ersetzt werden durch ein Hebelsystem mit angepaßter Kulisse für die Komfortverstellung (nicht gezeigt).

Die Fig. 4 zeigt als eine Alternative zur dritten Ausführungsform gemäß der Fig. 3 ein viertes Ausführungsbeispiel, in dem ein Mitnehmer 64 an der Kolbenstange 65 über eine abreißende Verbindung 66 einen gleitend geführten Keil 67 gegen einen Keil 68, der am Zylinder 49 befestigt ist, verkeilt. Damit ist der Zylinder 49 in der jeweiligen, durch den Komfort bestimmten Lage während eines Crashs fixiert.

Andere gleichwirkende Lösungen liegen im Rahmen des fachmännischen Wissens.

Zusammenfassend werden die dritten und vierten Ausführungsbeispiele Sicherheitslenkungen mit einem pyrotechnisch aktivierbaren Zylinder geschaffen, der während eines Crashs eine verstellbare Lenksäule entriegelt und vom Fahrer wegzieht. Damit wird ein größerer Abstand zwischen dem Fahrer und dem auslösenden Airbag und dem Lenkrad geschaffen. Beides vermindert die Verletzungsgefahr.

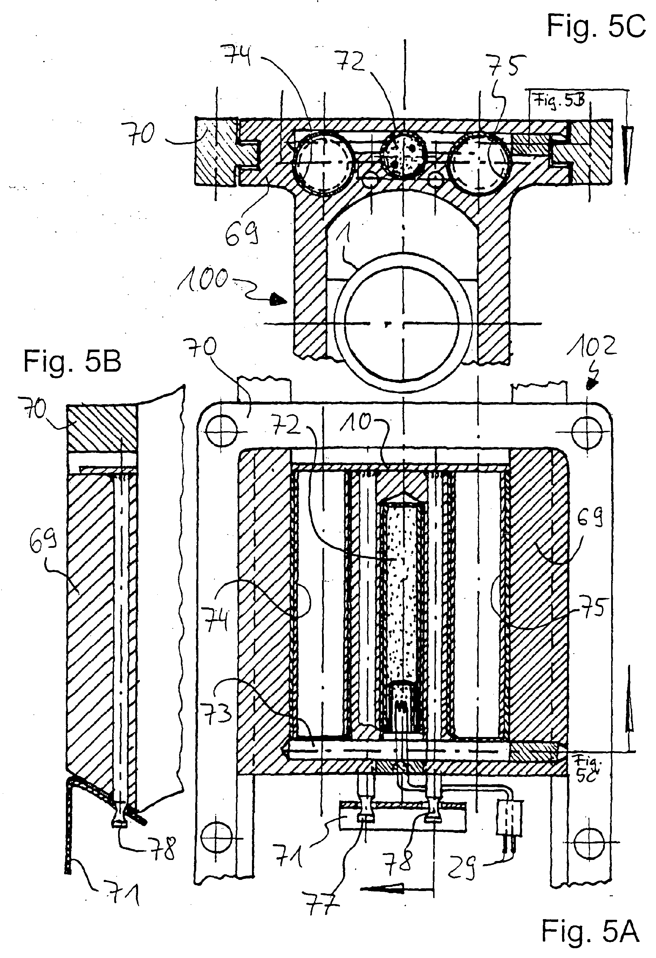

In den Fig. 5A, 5B und 5C ist ein fünftes Ausführungsbeispiel einer Sicherheitseinrichtung für ein Fahrzeug mit einem Lenkrad an einer Lenksäule und insbesondere eine pyrotechnisch verstellbare Lenksäulenbefestigung anhand von Schnittdarstellungen von Teilansichten verdeutlicht. Damit wird eine weitere Erhöhung der Sicherheit für z.B. Kraftfahrzeuginsassen erreicht, indem die Sicherheitseinrichtungen pyrotechnisch betriebene Lenksäulen- Rückzugseinrichtungen enthalten. Dadurch kann das Lenkrad vom Fahrer weg bewegt werden, wodurch dessen Verletzungsrisiko durch einen Aufprall auf das Lenkrad stark verringert wird.

Das fünfte Ausführungsbeispiel gemäß den Fig. 5A, 5B und 5C betrifft insbesondere eine pyrotechnisch verstellbare Lenksäule mittels eines "Schlittens", der sich bei einem Crash gegen einen Lastaufnehmer bewegt und damit Energie verzehrt.

Heutige, für einen Crash optimierte, Lenksäulen können, wie aus der Praxis bekannt ist, derart aufgebaut sein, daß sie an einem Schlitten befestigt sind, der sich bei einem Aufschlag einer Person auf das Lenkrad gegen eine Lastaufnahme bewegt. Diese Lastaufnahme ist beispielsweise ein verformbares oder sich verformendes und aufreißendes Blech, das einerseits mit dem Schlitten und andererseits der Lenkungsbefestigung an der Karosse verbunden ist. Bei einem Unfall erfolgt zusätzlich zum Airbag eine Bewegung des Lenkrades, was dabei Energie verzehrt. Dieser Abbau der Lastspitze ist besonders bei schwergewichtigen Personen als Ergänzung zum Airbag von Vorteil.

Kleine Fahrer sitzen gezwungenermaßen dicht vor dem Lenkrad. Bedingt durch den dadurch relativ geringen, für einige Unfallsituationen zu geringen Abstand zum Airbag kam es schon zu Todesfällen, obwohl die Personen angeschnallt waren (s. Begründung für den Gesetzentwurf der FMVSS208 USA, gültig ab 4.99).

Bei dem fünften Ausführungsbeispiel der vorliegenden Erfindung wird der Schlitten, der bei schwergewichtigen Personen Energie verzehrt, benutzt, um sich zeitlich vor oder während des Öffhens des Fahrerairbags nach vorne (d.h. in normaler Fahrtrichtung) zu bewegen. Hiermit wird der Abstand des Kopfes einer kleinen Person zum Airbag um die notwendige Entfernung vergrößert, die für ein verletzungsfreies Öffnen des Bags erforderlich ist.

Wird z.B. durch Erfassung mittels elektrischer Schalter am Fahrersitz festgestellt, daß der Fahrer sich im vorderen Bereich der Sitzstellung befindet, wird durch die Airbag-Crashelektronik zeitlich vor oder während der Öffnung des Airbags eine pyrotechnische Patrone gezündet, die im oder am Schlitten positioniert ist. Der von der Patrone erzeugte Gasdruck wird über einen Kanal auf Kolben geleitet, die zuerst die Befestigung eines Lastaufnahmeblechs entriegeln und dann den Schlitten mit der Lenksäule in Fahrtrichtung bewegen. Anhand praktischer Beispiele wurde ermittelt, daß sich somit der Abstand vom Airbag zum Kopf um ca. 70 mm vergrößert. Für leichtgewichtige, kleine Personen reicht der Airbag als Schutz aus. Es gibt keine kritische Lastspitze. Kritisch ist bei kleinen Personen der geringe Abstand des Airbags, der mit dieser fünften Ausführungsform gemäß den Fig. 5A, 5B und 5C ausreichend vergrößert wird.

Die Fig. 5A, 5B und 5C zeigen das fünfte Ausführungsbeispiel der Erfindung mit einem beweglichen Schlitten 69 in einem Rahmen 70, der an der Karosserie (nicht gezeigt) längs verschiebbar gelagert ist. Unter Bezugnahme auf die Fig. 5A, 5B und 5C absorbiert ein verbiegund aufreißbares "Lastblech" 71 bei großen Personen die Lastspitzen, wenn die Person auf das Lenkrad (nicht gezeigt) schlägt. Hierbei wird die pyrotechnische Patrone 72 nicht aktiviert. Gibt eine Überwachungselektronik (nicht gezeigt) das Signal, daß eine Person dicht vor dem Lenkrad sitzt, wird die pyrotechnische Patrone 72 gezündet. Durch einen Druckverteilungskanal 73 werden Kolben 74 und 75 an ihrer Stirnseite beaufschlagt. Diese Kolben 74 und 75 drücken zuerst auf ein Querblech 76, das mit - in diesem Beispiel - zwei Verriegelungsbolzen 77 und 78 für die Anbindung des Lastaufnahmebleches 71 verbunden sind. Diese Verriegelungsbolzen 77 und 78 werden aus den Löchern des Lastaufhahmebleches 71 gezogen. Der Schlitten 69 wird anschließend durch die Kolben 74 und 75, die sich am Befestigungsrahmen 70 abstützen, in Fahrtrichtung bewegt. Hierbei wird das Lastaufnahmeblech 71 nach oben weggebogen und gibt den Weg frei für die Schlittenbewegung. Damit wird der Airbag von dem Fahrer schlagartig auf größere Entfernung bewegt. Ähnliche Realisierungsmöglichkeiten mit gleicher oder ähnlicher Wirkung ergeben sich aus der Abbildungen der Fig. 5A, 5B und 5C zusammen mit fachmännischem Wissen.

Nachfolgend werden einige allgemeine Angaben zum fünften Ausführungsbeispiel dargestellt.

Grundsätzlich liegt dem fünften Ausführungsbeispiel die Idee zugrunde, daß eine Befestigung einer Lenksäule an einem Schlitten, der durch Aufschlag des Fahrers auf die Lenkung Lastspitzen durch Bewegung gegen ein energieaufnehmendes Blech aufnimmt, für kleine Personen, die dicht und verletzungsgefährdet nahe am Airbag sitzen, andersartig verwendet wird: Nachdem die Überwachungselektronik einen kleinen Menschen erkannt hat, wird mittels der erfindungsgemäßen Mechanik unter Verwendung von Pyrotechnik das Lastaufnahmeblech vom längsbeweglichen Schlitten entriegelt und der Schlitten mittels einer pyrotechnisch druckbeaufschlagten Kolbenanordnung in Fahrtrichtung bewegt. Hierdurch entsteht der Verletzungen vermeidende größere Abstand vom Kopf einer kleinen Person zum Airbag bei dessen Zündung.

Anders ausgedrückt wird gemäß dem fünften Ausführungsbeispiel in einer bevorzugten Ausgestaltung der vorliegenden Erfindung allgemein ein Lastspitzen aufnehmender Lenksäulenbefestigungsschlitten für schwergewichtige Personen bei kleinen, verletzungskritisch dicht vor dem Airbag sitzenden Personen derart pyrotechnisch verschoben, daß keine Verletzungen mehr durch Airbagzündungen entstehen können.

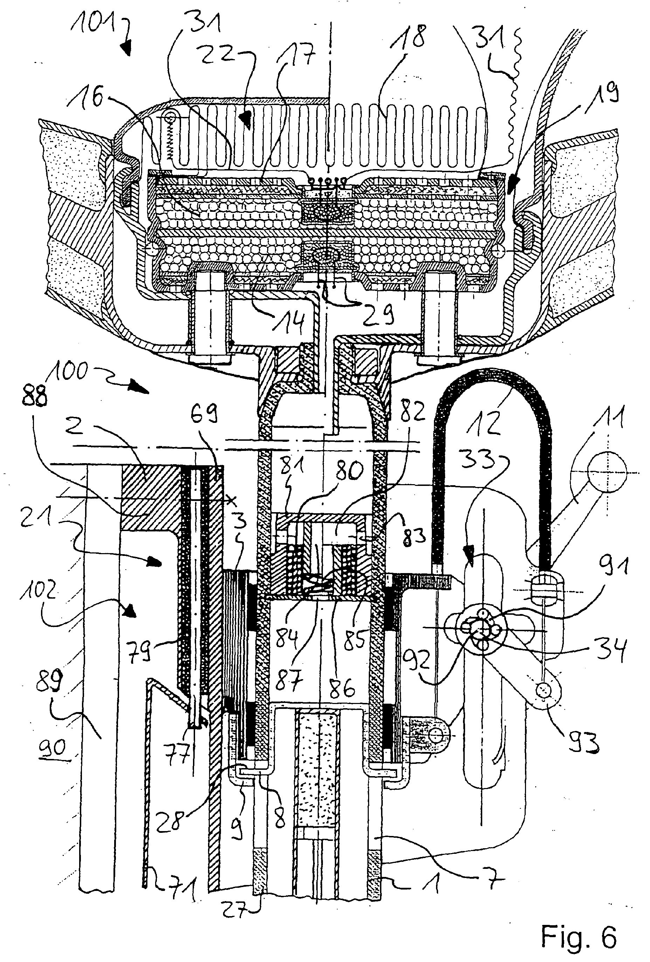

Eine weitere, sechste Ausführungsvariante einer erfindungsgemäßen Sicherheitseinrichtung für ein Fahrzeug mit einem Lenkrad an einer Lenksäule ist in der Fig. 6 gezeigt.

Grundsätzlich gilt auch bei diesem Ausführungsbeispiel voll inhaltlich der im Zusammenhang mit vorherigen Ausführungsformen vorgegebene Sachverhalt, so daß nachfolgend nur mehr die Unterschiede dieser sechsten Alternative, wie sie in der Fig. 6 gezeigt ist, zu den früher behandelten Ausführungsbeispielen beschrieben.

Der Druck vom Airbag kann dazu benutzt werden, mittels Kolben, wie in den früheren Beispielen gezeigt ist, die Komfortverstellung zu entriegeln.

Das Druckgas kann dabei auch z.B. mit einem Magnetventil derart gesteuert werden, daß es Durchgang zur Lenksäulenverstellung hat oder nicht. Ein solches Magnetventil sitzt vorzugsweise im Lenksäulenrohr zwischen Airbagdruckversorgung und Kolben.

Hintergrund für diese Maßnahme ist die Tatsache, daß es für schwergewichtige, große Personen, die richtig plaziert sind, von Vorteil ist, wenn die Lenkung in Normallage bleibt, um zusätzlich zum Airbag Energie absorbieren zu können. Bei kleinen, nahe am Lenkrad und Airbag sitzenden Personen ist es dagegen besser, mehr Abstand zum Airbag zu haben. Hier ist der Airbag allein als Energieaufnahme ausreichend.

Das Erkennen einer kleinen Person kann durch Ultraschall- oder Infrarotsensoren, Sitzbelegungserkennungsmatten oder Abfragen der Sitzeinstellung oder Sitzmemoryelektronik erfolgen. Am einfachsten und kostengünstigsten ist ein Schalter in der Sitzschiene, der die Position abfragt und bei vorderen Fahrersitzstellungen richtigerweise kleine Personen diagnostiziert. Wenn also eine kleine Person fährt, kann somit grundsätzlich das Magnetventil zum Gasdurchgang und damit zum Öffnen der Komfortverstellung auf Durchgang geschaltet sein.

Eine weitere Möglichkeit ist die Feststellung, üblicherweise mit einem Schalter im Gurtschloß, ob die (kleine) (evtl. auch große) Person angeschnallt ist oder nicht. Daraus läßt sich vor allem für eine kleine, nicht angeschnallte Person die Lenkradverstellung weg vom Kopf steuern.

Eine weitere Ergänzung zu den Ausführungsbeispielen eins bis fünf ist die Verwendung eines "Freilaufes" zwischen Losdrehachse der Lenkungsverstellung und des Hebels, der bei einem Crash die Verstellung öffnet. Hierdurch bleibt das Crashentriegelungssystem bei Komfortverstellung in Ruhe.

Eine zusätzliche oder auch alternative Möglichkeit, die Lenksäule beim Crash auf mehr Abstand bei kleinen, evtl. nicht angeschnallten Personen zu bringen, ist mit dem sogenannten "Crashschlitten" machbar.

Moderne Sicherheitssäulen sind üblicherweise in einem schlittenartigen Gehäuse gelagert, das seinerseits wieder in einem Rahmen geführt wird, der mit der Karosserie verschraubt ist. Das schlittenartige Gehäuse ist mit dem Rahmen mittels eines Blechs verbunden (dem fünften Ausführungsbeispiel). Bei einem Crash wird dieses Blech Energie aufnehmend verformt, wenn ein großer, schwerer Insasse hohe Kräfte auf das Lenksystem gibt, wie bereits weiter oben erläutert wurde.

Da diese Energieaufnahme vor allem für große, schwere Personen notwendig ist, kann man den Crashschlitten bei kleinen, evtl. sogar nicht angeschnallten Personen besser folgendermaßen nutzen.

Wie in der Fig. 6 gezeigt ist, wird das Energie aufnehmende Blech 71 mit Verriegelungsbolzen 77 derart gehalten, daß nur bei großen, schweren Personen das Blech 71 in Funktion ist. Eine Magnetspule 79 kann diese Verriegelungsbolzen 77 aus dem Last aufnehmenden Blech 71 ziehen und so den Weg frei machen für eine Bewegung des Crash-Schlittens 69 von der Person weg, ohne die Bremswirkung des Energie aufnehmenden Bleches 71. Der Schlitten 69 wird bewegt durch den Rückstoß des Airbags 18, der Masse des Lenksystems oder zusätzlich mit einer pyrotechnischen Kartusche 30, wie im Zusammenhang mit der fünften Ausführungsform dargestellt ist.

Eine weitere Möglichkeit, die Lenkung bei einem Crash zu bewegen, ist zusätzlich oder alternativ zum Crashschlitten und alternativ der Verstellung mittels Kolben in der Lenksäule die Möglichkeit, mittels eines pyrotechnisch angetriebenen Zylinders die Komfortverstellung der Lenkung bei Bedarf zu öffnen, gemäß den dritten und vierten Ausführungsvarianten.

Im Ausführungsbeispiel, wie es in der Fig. 6 gezeigt ist, wird eine zweistufige Airbagvorrichtung 22 verwendet, die die Lenkung 100 nach Bedarf verstellt, selbsttätig mittels einer Druckwanne die Airbagabdeckung öffnet und dann mit dem weich aufgeblasenen Bag 18 mit mehreren angenähten Fäden oder Schüren 31 feststellt, ob sich der Fahrer "out of postion" im Gefahrenbereich des Bags 18 aufhält oder nicht. Können alle Fäden 31 ihre volle Länge erreichen und abreißen, so wird dadurch die zweite stärkere Stufe des Bags 18 gezündet.

Im Rahmen des sechsten Ausführungsbeispiel kann somit zusammenfassend mittels Sitzpositionserkennung und/oder Gurtanschnallerkennung bei der Lenkung lange vor dem Unfall entschieden werden, ob
1. der Crashschlitten Energie aufnehmend oder als Bewegungsschlitten für mehr Abstand zwischen Kopf und Bag benutzt wird,
2. die Komfortlängs- und/oder Höhenverstellung geöffnet wird oder nicht, je z.B. dem Gewicht der Person oder ihrem Anschnallverhalten,
3. der Airbagdruck die Komfortverstellung der Lenkung öffnet und dann z.B. über eine Druckwanne in jedem Fall die Airbagabdeckung öffnet, damit der Bag weich austreten kann. Die zweite Stufe der Airbagvorrichtung kann dann vom Airbagsteuergerät oder alternativ vom gleichen Signal gezündet werden, wie die erste Stufe. Das ist insbesondere sinnvoll bei großen, schweren Personen, die angeschnallt sind. Bei kleinen oder/und nicht angeschnallten Personen tritt der Bag der ersten Stufe weich aus und stellt mittels angenähter Fäden fest, ob sich der Bag überall voll ausdehnen kann. Erst dann, wenn niemand im Weg ist, wird die zweite Stufe gezündet.

### Damit sind folgende Vorteile verbunden:

Mit einer einfachen Sitzlage- und/oder Anschnallerkennung wird bei jeder neuen Fahrt grundsätzlich vor dem Unfall entschieden, ob die Lenkung auf mehr Abstand gebracht wird oder nicht, und ob die Airbagvorrichtung erst diagnostizieren muß, ob die zweite, mehr Sicherheit bietende, aber aggressivere Stufe zünden darf oder nicht.

Beispielsweise kann auch vorgesehen sein, daß der Bag seine Abdeckung nicht selbst öffnen muß, sondern weich austreten kann. Mit dieser Maßnahme lassen sich die Gefahren des Systems halbieren.

Weiter werden durch die einzelnen Varianten der Erfindung für kleine Personen, nicht angeschnallte Personen, "out of position" Personen und Kindersitze individuelle Maßnahmen getroffen zur Absenkung der Aggressivität des Fahrerairbags. Die Maßnahmen werden vor dem Crash und teilweise simultan getroffen. Gegenüber andersartigen "elektronischen" Lösungen sind die im Rahmen der Erfindung vorgeschlagene Grundsätze, Systeme und Ausführungen schneller und weitaus kostengünstiger. Ferner werden durch die Lenksäulenverstellung und insbesondere die anpaßbare und steuerbare Lenksäulenverstellung die Probleme des "tödlichen" Airbags an der Wurzel gelöst.

Nochmals unter Bezugnahme auf die Fig. 6 und das darin gezeigte sechste Ausführungsbeispiel ist dort ein Magnetventil 80 mit einem Gehäuse 81 gezeigt, das Gas in sein Inneres 82 über Öffnungen 83 strömen läßt. Ein elektrisches, z.B. durch Sitzlage und Gurtbelegung abgeleitetes Signal zieht mittels einer Magnetspule 79 ein Rohr 84 auf "Gasdurchgang" oder "nicht Gasdurchgang". Das Rohr 84 wird durch eine Feder 85 in Position "geschlossen" gehalten. Weiter ist im Befestigungsblech 86 des Magnetventiles 80 ein für eine bestimmte Gasdurchgangsgeschwindigkeit vorgesehenes Loch 87 vorgesehen. Jede andere Art von Ventilen ist denkbar.

Weiter zeigt die Fig. 6 die Abwandlung eines Crash-Schlittens 69, das schlittenartige Gehäuse 88, das die Lenksäule 1 aufnimmt und seinerseits wieder in einem Rahmen 89 geführt wird, der an der Karosse 90 angeschraubt wird. Das Last aufnehmende Blech 71 wird durch Verriegelungsbolzen 77 bei Bedarf mit einer Magnetspule 79 entriegelt, so daß der Crashschlitten 69 als Lenkungswegbewegungsschlitten genutzt werden kann.

Weiter zeigt die Fig. 6 einen "Freilauf' 91 zwischen einer "Losdrehachse" 92 und dem Hebel 93, der die Lenkung 100 bei einem Crash zum Verstellen öffnet.

Die Erfindung ist anhand der Ausführungsbeispiele in der Beschreibung und in den Zeichnungen lediglich exemplarisch dargestellt und nicht darauf beschränkt, sondern umfaßt alle Variationen, Modifikationen und Substitutionen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele und deren Darstellungen in der Zeichnung entnehmen kann. Insbesondere sind alle einzelnen Merkmale und Ausgestaltungsmöglichkeiten der Erfindung und ihrer Ausführungsbeispiele kombinierbar.

### Bezugszeichenliste

- 1: Lenksäule
- 2: Montageplatte
- 3: Verstellschlitten
- 4: Primärzündung
- 5: Druckkammer
- 6: Druckdurchgangslöcher
- 7: Schlitz
- 8: Schaltmuffe
- 9: Stellmuffe
- 10: Lösehebel
- 11: Stellhebel
- 12: Bowdenzug
- 13: Anschraubung der Lenkung
- 14: Zündung 1. Stufe
- 15: Zündkolben
- 16: Schnurzündung 2. Stufe
- 17: Partikelfilter
- 18: Bag
- 19: Gasdurchtritt von 1. Stufe
- 20: Sekundärdruckzündung
- 21: Rückfahrmechanik
- 22: Fahrerairbag oder Airbagvorrichtung
- 23: Doppelkolbenzündung
- 24a, 24b: Zünder
- 25: Ringzünder
- 26: Doppelreißzündung
- 27: Rohr
- 28: freies Ende der Schaltmuffe
- 29: elektrische Anschlußleitungen
- 30: Patrone oder Kartusche
- 31: Schnur
- 32: Lenksäulenbock
- 33: Lenksäulenarretierung oder Lenksäulenkomfortfeststellung
- 34: Verschraubung
- 35: Generator
- 36: Löcher
- 37: Generator
- 38: Booster
- 39: Ringkanal
- 40: Löcher
- 41: Kolben
- 42: Schlitze
- 43: Nasen
- 44: Dämpfer
- 45, 46: waagrechte bzw. senkrechte Kulissenführung
- 47: Klemm-, Schwenk- oder Verstellachse
- 48: Verstellhebel
- 49: Zylinder
- 50: Verstellkulisse
- 51: schwenkbares Lager
- 52: Zahnstange
- 53: Zahnrad
- 54: Kolben
- 55: Nocken
- 56: Komfortwegbegrenzung
- 57: Verrastkugeln
- 58: Luft- oder Hydraulikbremse
- 59: Medium
- 60: Düsenbohrungen
- 61: Zylinderdeckel
- 62: abgedichteter Zustand der Düsenbohrungen
- 63: Lagesicherung
- 64: Mitnehmer
- 65: Kolbenstange
- 66: Abreißverbindung
- 67: Gleitkeil
- 68: Keil
- 69: beweglicher Schlitten
- 70: Rahmen
- 71: Lastblech
- 72: Patrone
- 73: Druckverteilungskanal
- 74, 75: Kolben
- 76: Querblech
- 77, 78: Verriegelungsbolzen
- 79: Magnetspule
- 80: Magnetventil
- 81: Gehäuse
- 82: Gehäuseinnenraum
- 83: Öffnungen
- 84: Rohr
- 85: Feder
- 86: Befestigungsblech
- 87: Loch
- 88: schlittenartiges Gehäuse
- 89: Rahmen
- 90: Karosse
- 91: Freilauf
- 92: "Losdrehachse"
- 93: Hebel
- 100: Sicherheitslenksäule oder Sicherheitslenkung
- 101: Sicherheitseinrichtungen oder Sicherheitssystem
- 102: Lenksäulen-Rückzugseinrichtung

## Patentansprüche

1. Sicherheitslenksäule, die in ihrer Axialrichtung verstellbar ist, wobei pyrotechnisch betriebene Lenksäulen-Rückzugseinrichtungen vorgesehen sind, mittels denen eine Verstellung der Sicherheitslenksäule in ihrer Axialrichtung bei einem Crash vom Insassen weg betreibbar ist und die zur Auslösung eine pyrotechnische Patrone enthalten, und wobei die Lenksäulen-Rückzugseinrichtungen in Abhängigkeit von Fahrerdaten steuerbar, insbesondere ein- und ausschaltbar sind,
**dadurch gekennzeichnet,**
**daß** eine Überwachungselektronik vorgesehen ist, die ausgelegt ist, zu erkennen, wenn eine kleine Person zu dicht vor dem Lenkrad sitzt, und in diesem Fall zu veranlassen, daß die pyrotechnische Patrone gezündet wird.

2. Sicherheitslenksäule nach Anspruch 1,
**dadurch gekennzeichnet,**
**daß** der Überwachungselektronik Ultraschall- oder Infrarotsensoren, Sitzbelegungserkennungsmatten und/oder eine Sitzlage- und/oder Sitzpositionserkennung, insbesondere durch Sitzeinstellungs- oder Sitzmemoryelektronikabfragen oder einen Schalter in der Sitzschiene, der die Position abfragt und bei vorderen Fahrersitzstellungen richtigerweise kleine Personen diagnostiziert, zugeordnet sind/ist, um darüber festzustellen, wenn eine kleine Person zu dicht vor dem Lenkrad sitzt, und/oder
**daß** der Überwachungselektronik eine Gurtanschnallerkennung, insbesondere mit einem Schalter in einem Gurtschloß, des Fahrers zugeordnet ist, um darüber festzustellen, wenn der Fahrer angeschnallt ist oder nicht und jedenfalls für eine kleine, nicht angeschnallte Person die Lenkradverstellung weg vom Kopf zu steuern.

3. Sicherheitslenksäule nach Anspruch 1 oder 2,
daß durch die Verstellung der Sicherheitslenksäule in ihrer Axialrichtung bei einem Crash vom Insassen weg sich somit der Abstand von einem Airbag zum Kopf um ca. 70 mm vergrößerbar ist, und/oder
daß mit einer einfachen Sitzlage- und/oder Anschnallerkennung bei jeder neuen Fahrt grundsätzlich vor einem Unfall entschieden wird, ob die Lenkung auf mehr Abstand gebracht wird oder nicht, und/oder ob eine Airbagvorrichtung erst diagnostizieren muß, ob eine zweite, mehr Sicherheit bietende, aber aggressivere Stufe zünden darf oder nicht.

4. Sicherheitslenksäule nach einem der vorhergehenden Ansprüche,
**dadurch gekennzeichnet,**
**daß** die pyrotechnische Patrone bei großen Personen nicht aktiviert wird, und/oder
**daß** Lastabsorptionseinrichtungen vorgesehen sind, und daß die Überwachungselektronik ausgelegt ist, zu veranlassen, daß die Lastabsorptionseinrichtungen bei großen und/oder schweren Personen wirksam und vorzugsweise bei kleinen Personen unwirksam sind, und/oder
**daß** ein Lenksäulenbefestigungsschlitten elektronisch gesteuert bei großen Personen mit einem Lastabsorbierungsblech Lastspitzen aufnimmt, und gleichzeitig verwendet wird, um pyrotechnisch insbesondere elektronisch gesteuert die Sicherheitslenksäule auf größere Distanz zu kleinen, nahe an einem Airbag sitzenden Personen zu bringen.

5. Sicherheitslenksäule nach einem der vorhergehenden Ansprüche,
**dadurch gekennzeichnet,**
**daß** mittels Sitzpositionserkennung und/oder Gurtanschnallerkennung bei der Lenkung durch die Überwachungselektronik entschieden wird, ob
ein Crashschlitten Energie aufnehmend oder als Bewegungsschlitten für mehr Abstand zwischen Kopf und Bag benutzt wird, oder
eine Komfortlängs- und/oder Höhenverstellung geöffnet wird oder nicht, insbesondere in Abhängigkeit vom Gewicht der Person oder ihrem Anschnallverhalten, oder
ein Airbagdruck eine Komfortverstellung der Lenkung öffnet und dann insbesondere über eine Druckwanne in jedem Fall eine Airbagabdeckung öffnet, damit der Bag weich austreten kann, und ggf. eine zweite Stufe der Airbagvorrichtung dann von einem Airbagsteuergerät oder alternativ vom gleichen Signal gezündet werden kann, wie eine erste Stufe, insbesondere bei großen, schweren Personen, die angeschnallt sind, oder bei kleinen oder/und nicht angeschnallten Personen der Bag der ersten Stufe weich austritt und mittels angenähter Fäden feststellt, ob sich der Bag überall voll ausdehnen kann, und erst dann, wenn niemand im Weg ist, die zweite Stufe gezündet wird.

6. Sicherheitssystem, **gekennzeichnet durch** eine Sicherheitslenksäule nach einem der vorhergehenden Ansprüche.

7. Fahrzeug, **gekennzeichnet durch** eine Sicherheitslenksäule und/oder ein Sicherheitssystem nach einem der vorhergehenden Ansprüche.

8. Sicherheitsverfahren zum Auslösen und Betätigen einer Sicherheitslenksäule und/oder eines Sicherheitssystems damit, wobei die Sicherheitslenksäule in ihrer Axialrichtung verstellbar ist durch pyrotechnisch betriebene Lenksäulen-Rückzugseinrichtungen, mittels denen eine Verstellung der Sicherheitslenksäule in ihrer Axialrichtung bei einem Crash vom Insassen weg betreibbar ist und die zur Auslösung eine pyrotechnische Patrone enthalten, und wobei die Lenksäulen-Rückzugseinrichtungen in Abhängigkeit von Fahrerdaten gesteuert, insbesondere ein- und ausgeschaltet, werden,
**dadurch gekennzeichnet,**
**daß** eine Überwachungselektronik erkennt, wenn eine kleine Person zu dicht vor dem Lenkrad sitzt, und in diesem Fall die pyrotechnische Patrone zündet.

9. Sicherheitsverfahren nach Anspruch 8,
**dadurch gekennzeichnet,**
**daß** durch die Verstellung der Sicherheitslenksäule in ihrer Axialrichtung bei einem Crash vom Insassen weg sich somit der Abstand von einem Airbag zum Kopf um ca. 70 mm vergrößert wird, und/oder
**daß** mit einer einfachen Sitzlage- und/oder Anschnallerkennung bei jeder neuen Fahrt grundsätzlich vor einem Unfall entschieden wird, ob die Lenkung auf mehr Abstand gebracht wird oder nicht, und/oder ob eine Airbagvorrichtung erst diagnostizieren muß, ob eine zweite, mehr Sicherheit bietende, aber aggressivere Stufe zünden darf oder nicht, und/oder
**daß** die pyrotechnische Patrone bei großen Personen nicht aktiviert wird, und/oder
**daß** Lastabsorptionseinrichtungen vorgesehen sind, und daß die Überwachungselektronik veranlaßt, daß die Lastabsorptionseinrichtungen bei großen und/oder schweren Personen wirksam und vorzugsweise bei kleinen Personen unwirksam sind, und/oder
**daß** ein Lenksäulenbefestigungsschlitten elektronisch gesteuert bei großen Personen mit einem Lastabsorbierungsblech Lastspitzen aufnimmt, und gleichzeitig verwendet wird, um pyrotechnisch insbesondere elektronisch gesteuert die Sicherheitslenksäule auf größere Distanz zu kleinen, nahe an einem Airbag sitzenden Personen zu bringen.

10. Sicherheitsverfahren nach Anspruch 8 oder 9,
**dadurch gekennzeichnet,**
**daß** mittels Sitzpositionserkennung und/oder Gurtanschnallerkennung bei der Lenkung durch die Überwachungselektronik entschieden wird, ob
ein Crashschlitten Energie aufnehmend oder als Bewegungsschlitten für mehr Abstand zwischen Kopf und Bag benutzt wird, oder
eine Komfortlängs- und/oder Höhenverstellung geöffnet wird oder nicht, insbesondere in Abhängigkeit vom Gewicht der Person oder ihrem Anschnallverhalten, oder
ein Airbagdruck eine Komfortverstellung der Lenkung öffnet und dann insbesondere über eine Druckwanne in jedem Fall eine Airbagabdeckung öffnet, damit der Bag weich austreten kann, und ggf. eine zweite Stufe der Airbagvorrichtung dann von einem Airbagsteuergerät oder alternativ vom gleichen Signal gezündet werden kann, wie eine erste Stufe, insbesondere bei großen, schweren Personen, die angeschnallt sind, oder bei kleinen oder/und nicht angeschnallten Personen der Bag der ersten Stufe weich austritt und mittels angenähter Fäden feststellt, ob sich der Bag überall voll ausdehnen kann, und erst dann, wenn niemand im Weg ist, die zweite Stufe gezündet wird.
